# EUROPEAN PATENT APPLICATION

(11) **EP 4 544 967 A1**
(43) Date of publication of application: **30.04.2025**
(21) Application number: 24208593.4
(22) Date of filing: 24.10.2024
(51) Int. Cl.: A47J 37/06

(54) **AIR FRYER WITH GOOD THERMAL INSULATION**

(30) Priority: 27.10.2023 CN 202322892358 U; 20.05.2024 CN 202421102610 U
(71) Applicant: Ningbo Careline Electric Appliance Co., Ltd., Ningbo, Zhejiang 315000 (CN)
(72) Inventor: ZHANG, Yichi, Ningbo, Zhejiang (CN); PAN, Huayuan, Ningbo, Zhejiang (CN); HE, Sheng, Ningbo, Zhejiang (CN); HUO, Zhian, Ningbo, Zhejiang (CN)
(74) Representative: Meyer-Dulheuer MD Legal Patentanwälte PartG mbB

(57) **Abstract**

The present disclosure relates to an air fryer with good thermal insulation. An air fryer with good thermal insulation, including a body, a cooking cavity located within the body, and a hot air circulation system connected to the cooking cavity, wherein at least part of the outside of the cooking cavity is equipped with a heat insulation component that matches the outer wall of the cooking cavity, the heat insulation component and the outer wall of the cooking cavity are suitable for forming a heat insulation chamber, the heat insulation chamber contains a heat insulation medium.

## Description

### CROSS-REFERENCE TO RELATED APPLICATIONS

The present disclosure claims the priority of Chinese patent application No. 202421102610.8, filed to the CNIPA on May 20, 2024 and entitled "Air Fryer With Good Thermal Insulation", and Chinese patent application No. 202322892358.7, filed to the CNIPA on October 27, 2023 and entitled "New Type Of High Temperature Air Fryer", the entire contents of which are incorporated by reference in the present disclosure.

### TECHNICAL FIELD

The present disclosure relates to the technical field of kitchen appliances and cooking appliances, particularly to an air fryer, and more particularly to an air fryer with good thermal insulation.

### BACKGROUND

With the development of society and the improvement of people's living standards, the usage rate of air fryers has been increasing. However, most existing air fryers have poor heat insulation properties. During use, the high temperature inside the heating cavity of the air fryer is easily transferred to the outside, which not only affects the normal operation and service life of the electrical components outside the cavity but also may cause the surface temperature of the machine to become excessively high, thus increasing the risk of user burns and poor safety.

### SUMMARY

In order to solve the above at least one technical problem, the present invention discloses the following technical solutions:
An air fryer with good thermal insulation, including a body, a cooking cavity located within the body, and a hot air circulation system connected to the cooking cavity, wherein at least part of the outside of the cooking cavity is equipped with a heat insulation component that matches the outer wall of the cooking cavity, the heat insulation component and the outer wall of the cooking cavity are suitable for forming a heat insulation chamber, the heat insulation chamber contains a heat insulation medium.

In one or more embodiments, the top of the cooking cavity has an air duct plate forming at least part of the cooking cavity, a first heating component located below the air duct plate, a first heat insulation component located above the air duct plate, the first heat insulation component and the air duct plate are suitable for forming a first heat insulation chamber, the first heat insulation chamber corresponds to at least part of the first heating component.

In one or more embodiments, the bottom of the cooking cavity has a lower machine core forming at least part of the cooking cavity, a second heating component located above the lower machine core, a second heat insulation component located below the lower machine core, the second heat insulation component and the lower machine core are suitable for forming a second heat insulation chamber, the second heat insulation chamber corresponds to at least part of the second heating component.

In one or more embodiments, the body has a heat dissipation air duct connected to the atmosphere, a heat dissipation system located within the heat dissipation air duct for generating a cooling airflow, the heat dissipation air duct is designed to surround at least part of the heat insulation component.

In one or more embodiments, the body has an air intake and an exhaust port connected to the heat dissipation air duct, the air intake located on the rear side of the body, the exhaust port located on the top, bottom, or one or more sides of the body.

In one or more embodiments, the body has an air intake and an exhaust port connected to the heat dissipation air duct, with the air intake located on the top, bottom, or one or more sides of the body, and the exhaust port located at the top rear of the body.

In one or more embodiments, the rear outer side of the cooking cavity has an installation cavity connected to the heat dissipation air duct, the installation cavity containing a drive system and electrical components, the drive system is designed to connect with the hot air circulation system and the heat dissipation system, a third heat insulation component matching the rear wall of the cooking cavity is placed between the installation cavity and the cooking cavity, the third heat insulation component and the rear wall of the cooking cavity are suitable for forming a third heat insulation chamber, the heat dissipation air duct is designed to surround at least part of the third heat insulation chamber; and further, wherein the body has an air intake and an exhaust port, the air intake connected to the installation cavity and the exhaust port connected to the heat dissipation air duct.

In one or more embodiments, the cooking cavity has a side opening, a side cover that can be opened and closed is provided at the side openings, the side cover has a visual port connected to the cooking cavity, and a visual component seals the visual port; and further, wherein the body has a heat dissipation air duct connected to the atmosphere, a heat dissipation system located within the heat dissipation air duct for generating a cooling airflow, the heat dissipation air duct is designed to surround at least part of the heat insulation chamber, a cold air channel is located within the side cover, one end of the cold air channel connected to the heat dissipation air duct, and the other end connected to the atmosphere.

In one or more embodiments, a heat dissipation air duct located within the body, the heat dissipation air duct designed to surround the heat insulation component, a heat dissipation system located within the heat dissipation air duct, the body has a ventilation port that connects the heat dissipation air duct to the atmosphere.

In one or more embodiments, the ventilation port including an air intake and an exhaust port, the air intake located on the rear side of the body, the exhaust port located at the bottom of the body, external cold air is suitable to flow from the air inlet into the heat dissipation duct and then towards the air outlet under the action of the heat dissipation system; and further, wherein the heat dissipation system is preferably positioned near the air intake.

In one or more embodiments, an air frying system located within the body, and the air frying system connected to the cooking cavity, the air frying system including a drive motor and a hot air circulation fan connected to the drive motor, the drive motor is located within the heat dissipation air duct and positioned close to the heat dissipation system.

In one or more embodiments, the cooking cavity is formed by a lower machine core and an air duct plate, the heat insulation component including an upper heat insulation plate and a lower heat insulation plate, the upper insulation plate and the lower insulation plate are respectively adapted to correspond to the air duct plate and the lower movement, the shapes of the upper insulation board and the lower insulation board are respectively consistent with the shapes of the air duct board and the lower movement, the overall size of the upper insulation board and the lower insulation board is respectively larger than that of the air duct board and the lower movement; and further, wherein both the upper heat insulation plate and the lower heat insulation plate are made of heat insulation material.

In one or more embodiments, the side of the body has a side opening connected to the cooking cavity, a frying basket can be extracted through the side opening within the cooking cavity, the frying basket including a basket body and a door mechanism connected to the basket body to seal the side opening, the door mechanism is made of high temperature resistant insulation material.

In one or more embodiments, the door mechanism contains a fourth heat insulation chamber, the fourth heat insulation chamber is equipped with the heat insulation medium.

In one or more embodiments, the heat insulation medium is heat insulation cotton, aerogel felt and other high temperature resistant heat insulation material.

### BRIEF DESCRIPTION OF THE DRAWINGS

To illustrate the technical solutions in the specific embodiments of the present disclosure or the prior art more clearly, the accompanying drawings required for use in the specific embodiments or the prior art will be briefly described below, and obviously, the accompanying drawings in the description are some embodiments of the present disclosure, and other drawings can be obtained from these drawings for those of ordinary skill in the art without paying inventive steps.
FIG. 1 is a schematic diagram of the overall structure of a first embodiment of an air fryer with good thermal insulation of the present disclosure.
FIG. 2 is a schematic diagram of the structural decomposition of a first embodiment of an air fryer with good thermal insulation of the present disclosure.
FIG. 3 is a partial cross-sectional view of a first embodiment of an air fryer with good thermal insulation of the present disclosure.
FIG. 4 is an overall cross-sectional view of a first embodiment of an air fryer with good thermal insulation of the present disclosure.
FIG. 5 is a partial cross-sectional view of a second embodiment of an air fryer with good thermal insulation of the present disclosure.
FIG. 6 is an overall cross-sectional view of a second embodiment of an air fryer with good thermal insulation of the present disclosure.
FIG. 7 is a partial cross-sectional view of a third embodiment of an air fryer with good thermal insulation of the present disclosure.
FIG. 8 is an overall cross-sectional view of a third embodiment of an air fryer with good thermal insulation of the present disclosure.
FIG. 9 is a schematic diagram of the overall structure of a fourth embodiment of an air fryer with good thermal insulation of the present disclosure.
FIG. 10 is an overall cross-sectional view of a fourth embodiment of an air fryer with good thermal insulation of the present disclosure.

Signs: 10(10A, 10B) - body; 11(11A, 11B) - cooking cavity; 12 - air duct plate; 13 - lower machine core; 14(14A, 14B) - heat dissipation air duct; 141(141B) - air intake; 142(142B) - exhaust port; 15 - heat dissipation system; 16 - installation cavity; 17(17A, 17B) - side opening; 18(18A, 18B) - side cover; 181(181A) - cold air channel; 182A(182B) - observation port; 19A(19B) - observation component; 20(20A, 20B) - hot air circulation system; 21 - first heating component; 22 - second heating component; 30 - heat insulation component; 31 - first heat insulation component; 32 - second heat insulation component; 33 - third heat insulation component; 40 - heat insulation chamber; 41 - first heat insulation chamber; 42 - second heat insulation chamber; 43 - third heat insulation chamber; 50 - drive system; 510 - body; 511 - cooking cavity; 512 - heat dissipation air duct; 513 - ventilation port; 5131 - air intake; 5132 - exhaust port; 514 - air duct plate; 515 - lower machine core; 516 - side opening; 520 - air frying system; 521 - drive motor; 522 - hot air circulation fan; 530 - heat insulation component; 531 - upper heat insulation plate; 532 - lower heat insulation plate; 540 - heat dissipation system; 550 - frying basket; 551 - frying basket body; 552 - door machine core; 5521 - fourth heat insulation chamber.

### DETAILED DESCRIPTION

The present disclosure provides an air fryer with good thermal insulation to solve the technical problems of poor heat insulation and safety of existing air fryers, and poor user experience.

In order to solve the above technical problems, the present disclosure provides an air fryer with good thermal insulation, including a body, a cooking cavity located within the body, and a hot air circulation system connected to the cooking cavity, wherein at least part of the outside of the cooking cavity is equipped with a heat insulation component that matches the outer wall of the cooking cavity, the heat insulation component and the outer wall of the cooking cavity are suitable for forming a heat insulation chamber, the heat insulation chamber contains a heat insulation medium. By providing a heat insulation component that matches the outer wall of the cooking cavity on the outside of the cooking cavity to form a heat insulation chamber with the outer wall of the cooking cavity and providing a heat insulation medium inside the heat insulation chamber, the influence of the high temperature inside the cooking cavity on the electrical components outside the cavity and the problem of the surface temperature of the body becoming excessively high can be reduced, thereby improving the performance stability and safety of the air fryer and enhancing the user experience.

In an optional embodiment, the top of the cooking cavity has an air duct plate forming at least part of the cooking cavity, a first heating component located below the air duct plate, a first heat insulation component located above the air duct plate, the first heat insulation component and the air duct plate are suitable for forming a first heat insulation chamber, the first heat insulation chamber corresponds to at least part of the first heating component. By providing a first heat insulation chamber corresponding to the first heating component inside the body, the heat insulation effect of the high temperature generated by the first heating component can be better achieved, thereby enhancing the heat insulation effect of the air fryer.

In an optional embodiment, the bottom of the cooking cavity has a lower machine core forming at least part of the cooking cavity, a second heating component located above the lower machine core, a second heat insulation component located below the lower machine core, the second heat insulation component and the lower machine core are suitable for forming a second heat insulation chamber, the second heat insulation chamber corresponds to at least part of the second heating component. By providing a second heat insulation chamber corresponding to the second heating component inside the body, the heat insulation effect of the high temperature generated by the second heating component can be better achieved, thereby enhancing the heat insulation effect of the air fryer.

In an optional embodiment, the body has a heat dissipation air duct connected to the atmosphere, a heat dissipation system located within the heat dissipation air duct for generating a cooling airflow, the heat dissipation air duct is designed to surround at least part of the heat insulation component. By surrounding the heat insulation component with the heat dissipation air duct, the heat dissipation system inside the heat dissipation air duct can cool the heat insulation component, thereby reducing the high temperature inside the cooking cavity from being transferred outward through the heat insulation component and further enhancing the heat insulation effect of the air fryer.

In an optional embodiment, the body has an air intake and an exhaust port connected to the heat dissipation air duct, the air intake located on the rear side of the body, the exhaust port located on the top, bottom, or one or more sides of the body. By setting the air intake on the back side of the body, the air intake can be hidden, thereby enhancing the overall aesthetics of the air fryer, at the same time, by setting the exhaust port on one or more of the top, bottom, and sides of the body, not only can the rear side intake air and the surrounding sides exhaust air be achieved, thereby enhancing the heat dissipation efficiency of the air fryer, but also the uniform heat dissipation of the body can be achieved, thereby enhancing the heat dissipation effect.

In an optional embodiment, the body has an air intake and an exhaust port connected to the heat dissipation air duct, with the air intake located on the top, bottom, or one or more sides of the body, and the exhaust port located at the top rear of the body. By placing the air intake on one or more of the top, bottom, and sides of the body, surrounding air intake can be achieved, effectively improving the intake efficiency and thus enhancing the heat dissipation efficiency and effect of the body.

In an optional embodiment, the rear outer side of the cooking cavity has an installation cavity connected to the heat dissipation air duct, the installation cavity containing a drive system and electrical components, the drive system is designed to connect with the hot air circulation system and the heat dissipation system, a third heat insulation component matching the rear wall of the cooking cavity is placed between the installation cavity and the cooking cavity, the third heat insulation component and the rear wall of the cooking cavity are suitable for forming a third heat insulation chamber, the heat dissipation air duct is designed to surround at least part of the third heat insulation chamber. By providing a third heat insulation chamber between the installation cavity and the cooking cavity, better heat insulation can be achieved, reducing the impact of high temperatures in the cooking cavity on the drive system and electrical components in the installation cavity, effectively enhancing the performance stability and heat insulation of the air fryer. Additionally, surrounding the third heat insulation chamber with the heat dissipation air duct allows for cooling airflow to dissipate heat from the outer wall of the third heat insulation chamber, further improving its heat insulation effect.

In an optional embodiment, the body has an air intake and an exhaust port, the air intake connected to the installation cavity and the exhaust port connected to the heat dissipation air duct. By connecting the air intake to the installation cavity, cooling airflow can be directed into the heat dissipation air duct while simultaneously cooling the drive system and electrical components in the installation cavity, ensuring their normal operation and enhancing the performance stability and reliability of the air fryer.

In an optional embodiment, the cooking cavity has a side opening, a side cover that can be opened and closed is provided at the side openings, the side cover has a visual port connected to the cooking cavity, and a visual component seals the visual port.

In an optional embodiment, the body has a heat dissipation air duct connected to the atmosphere, a heat dissipation system located within the heat dissipation air duct for generating a cooling airflow, the heat dissipation air duct is designed to surround at least part of the heat insulation chamber, a cold air channel is located within the side cover, one end of the cold air channel connected to the heat dissipation air duct, and the other end connected to the atmosphere. By providing a cold air channel within the side cover that connects to the heat dissipation air duct, heat can be dissipated from the side cover, reducing the risk of high temperatures in the cooking cavity transferring to the surface of the side cover and causing burns to users, effectively improving the safety of the air fryer.

In an optional embodiment, a heat dissipation air duct located within the body, the heat dissipation air duct designed to surround the heat insulation component, a heat dissipation system located within the heat dissipation air duct, the body has a ventilation port that connects the heat dissipation air duct to the atmosphere. By surrounding the heat insulation component with the heat dissipation air duct and incorporating a heat dissipation system, heat can be effectively dissipated from the heat insulation component, reducing the impact of cooking cavity temperatures on the external structure.

In an optional embodiment, the ventilation port including an air intake and an exhaust port, the air intake located on the rear side of the body, the exhaust port located at the bottom of the body, external cold air is suitable to flow from the air inlet into the heat dissipation duct and then towards the air outlet under the action of the heat dissipation system. By positioning the air intake and exhaust port on the rear side and bottom of the body, both can be concealed, enhancing the overall aesthetics of the air fryer.

In an optional embodiment, the heat dissipation system is preferably positioned near the air intake. By placing the heat dissipation system is preferably positioned near the air intake to increase the circulation speed of the cooling airflow within the heat dissipation air duct, thereby improving heat dissipation efficiency and effect.

In an optional embodiment, an air frying system located within the body, and the air frying system connected to the cooking cavity, the air frying system including a drive motor and a hot air circulation fan connected to the drive motor, the drive motor is located within the heat dissipation air duct and positioned close to the heat dissipation system. By placing the drive motor within the heat dissipation air duct, it can be cooled by the cooling airflow, while positioning it near the heat dissipation system enhances its cooling effect.

In an optional embodiment, the cooking cavity is formed by a lower machine core and an air duct plate, the heat insulation component including an upper heat insulation plate and a lower heat insulation plate, the upper insulation plate and the lower insulation plate are respectively adapted to correspond to the air duct plate and the lower movement, the shapes of the upper insulation board and the lower insulation board are respectively consistent with the shapes of the air duct board and the lower movement, the overall size of the upper insulation board and the lower insulation board is respectively larger than that of the air duct board and the lower movement. This design allows the upper and lower heat insulation plates to be manufactured using larger molds for the air duct plate and lower machine core, effectively reducing production costs and minimizing redesign costs.

In an optional embodiment, both the upper heat insulation plate and the lower heat insulation plate are made of heat insulation material. Using heat insulation material for these plates can further reduce the impact of high temperatures in the cooking cavity on the external structure, effectively enhancing structural reliability and safety.

In an optional embodiment, the side of the body has a side opening connected to the cooking cavity, a frying basket can be extracted through the side opening within the cooking cavity, the frying basket including a basket body and a door mechanism connected to the basket body to seal the side opening, the door mechanism is made of high temperature resistant insulation material. By using high temperature resistant insulation material for the door mechanism, the high temperatures in the cooking cavity can be prevented from affecting the structure of the door mechanism, and the risk of high temperatures transferring to the outside and causing burns to users can be minimized, effectively enhancing safety.

In an optional embodiment, the door mechanism contains a fourth heat insulation chamber, the fourth heat insulation chamber is equipped with the heat insulation medium. By incorporating a heat insulation chamber within the door mechanism and filling it with a heat insulation medium, the influence of cooking cavity temperatures on external structures can be effectively reduced, significantly enhancing safety.

In an optional embodiment, the heat insulation medium is heat insulation cotton, aerogel felt and other high temperature resistant heat insulation material. By using heat insulation cotton, aerogel felt and other materials with good heat insulation performance as the heat insulation medium, the heat insulation effect can be effectively improved.

Compared with the prior art, the beneficial effects of the present disclosure are as follows:
in the present disclosure, by providing a heat insulation component that matches the outer wall of the cooking cavity on the outside of the cooking cavity to form a heat insulation chamber and filling it with a heat insulation medium, the influence of high temperatures inside the cooking cavity on the electrical components outside the cavity can be reduced, as well as the risk of the body surface temperature becoming excessively high. This improves the performance stability and safety of the air fryer, enhancing the user experience.

In order to make the objects, technical solutions and advantages of the embodiments of the present disclosure more clear, the technical solutions in the embodiments of the present disclosure will be clearly and completely described below in conjunction with the accompanying drawings in the embodiments of the present disclosure, and obviously, the described embodiments are a part of the embodiments of the present disclosure, rather than all of the embodiments. The components of the embodiments of the present disclosure generally described and illustrated in the accompanying drawings herein can be arranged and designed in a variety of different configurations.

Thus, the following description of the embodiments of the present disclosure provided in the accompanying drawings is not intended to limit the scope of the present disclosure, but is merely representative of selected embodiments of the present disclosure. Based on the embodiments in the present disclosure, all other embodiments obtained by those of ordinary skill in the art without making inventive steps belong to the scope of protection of the present disclosure.

### Embodiment 1:

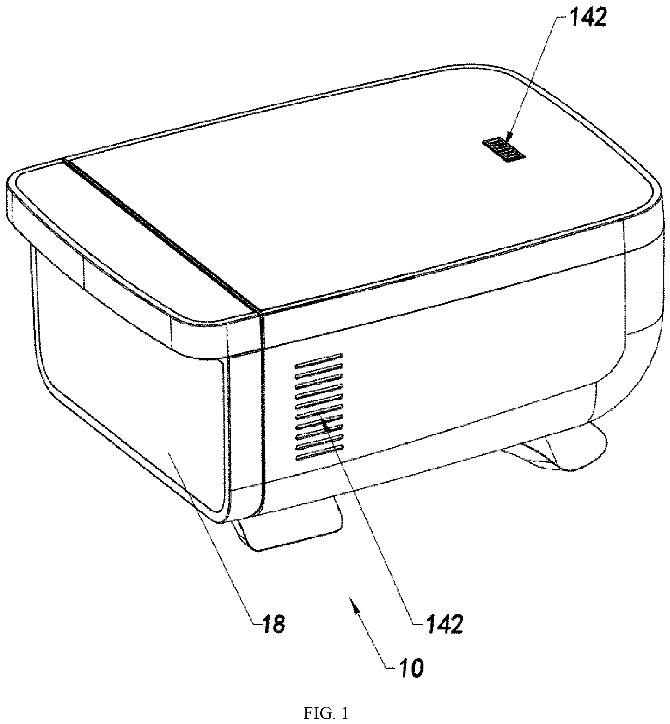

FIGS. 1 to 4 illustrate a first embodiment of an air fryer with good thermal insulation provided in this application, the air fryer including a body 10, a cooking cavity 11 located within the body 10 for placing food to be cooked, and a hot air circulation system 20 connected to the cooking cavity 11, the hot air circulation system 20 is adapted to generate a circulating hot airflow and introduce it into the cooking cavity 11 to heat the food inside the cooking cavity 11.

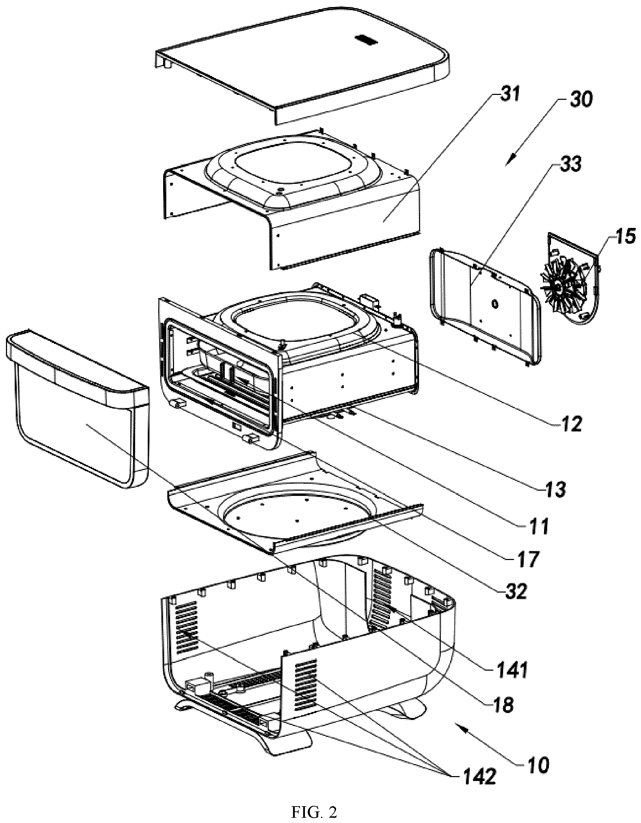

As shown in FIGS. 2 to 4, in the air fryer with good thermal insulation, at least a part of the outside of the cooking cavity 11 is equipped with a heat insulation component 30 that matches the outer wall of the cooking cavity 11, the heat insulation component 30 is suitable for being made of non-metallic heat insulation materials such as PP, PPS, nylon, etc. The heat insulation component 30 and the outer wall of the cooking cavity 11 are suitable for forming a heat insulation chamber 40, which contains a heat insulation medium. The heat insulation medium is suitable for being made of fire-resistant heat insulation materials such as mineral wool insulation materials, aluminosilicate insulation materials, polystyrene foam insulation materials, polyurethane foam boards, glass wool boards, fluorocarbon coatings, etc. The air fryer, by providing the heat insulation component 30 that matches the outer wall of the cooking cavity 11 on the outside of the cooking cavity 11, forms the heat insulation chamber 40 with the outer wall of the cooking cavity 11, and places the heat insulation medium inside the heat insulation chamber 40, can reduce the influence of high temperatures inside the cooking cavity 11 on the control circuits, circuit boards, and other electrical components outside the cooking cavity 11, thereby effectively improving the performance stability of the air fryer. At the same time, it can also reduce the high-temperature heat transfer from the cooking cavity 11 to the surface of the body 10, thereby reducing the risk of user burns, effectively improving the safety of use of the air fryer, and improving the user experience. In addition, fire-resistant heat insulation materials such as mineral wool insulation materials, aluminosilicate insulation materials, polystyrene foam insulation materials, polyurethane foam boards, glass wool boards, fluorocarbon coatings, etc., have good heat insulation and high-temperature resistance properties. Using these materials to make the heat insulation medium can not only effectively improve the heat insulation effect but also reduce the influence of high temperatures inside the cooking cavity 11 on the heat insulation medium, effectively ensuring the performance stability of the heat insulation medium.

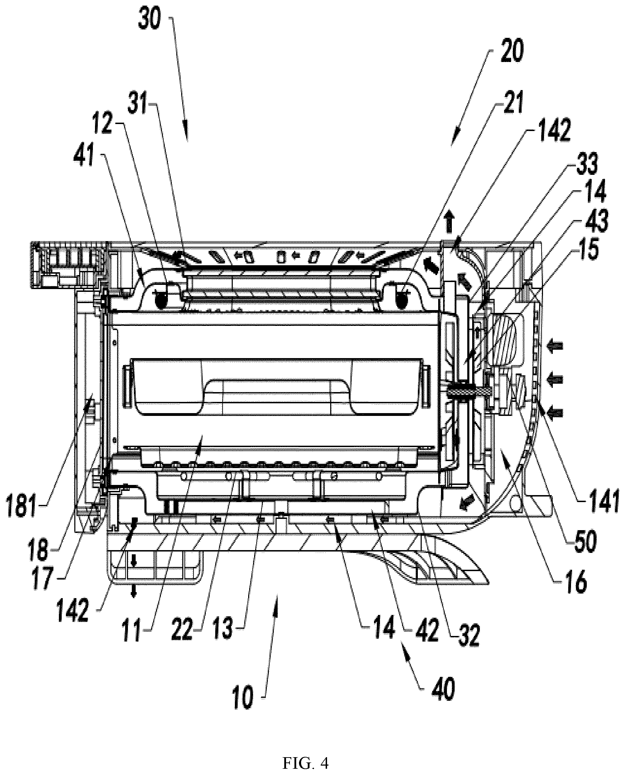

As shown in FIGS. 4, the hot air circulation system 20 including a first heating component 21 and a second heating component 22, which are suitable for being respectively located at the top and bottom of the cooking cavity 11. By setting the first heating component 21 and the second heating component 22 at the top and bottom of the cooking cavity 11, respectively, it is possible to simultaneously heat the top and bottom of the food inside the cooking cavity 11, thereby improving the cooking efficiency and effect.

As shown in FIG. 4, the top of the cooking cavity 11 has an air duct plate 12 that forms at least part of the cooking cavity 11. Below the air duct plate 12 is the first heating component 21, and above the air duct plate 12 is a first heat insulation component 31 that matches the air duct plate 12. Between the first heat insulation component 31 and the air duct plate 12, a first heat insulation chamber 41 is formed, which corresponds to at least part of the first heating component 21. By providing the first heat insulation chamber 41 corresponding to the first heating component 21 inside the body 10, better insulation of the high temperature generated by the first heating component 21 can be achieved, thereby enhancing the heat insulation effect of the air fryer.

As shown in FIG. 4, the bottom of the cooking cavity 11 has a lower machine core 13 that forms at least part of the cooking cavity 11. Above the lower machine core 13 is the second heating component 22, and below the lower machine core 13 is a second heat insulation component 32. Between the second heat insulation component 32 and the lower machine core 13, a second heat insulation chamber 42 is formed, which corresponds to at least part of the second heating component 22. By providing the second heat insulation chamber 42 corresponding to the second heating component 22 inside the body 10, better insulation of the high temperature generated by the second heating component 22 can be achieved, thereby enhancing the heat insulation effect of the air fryer.

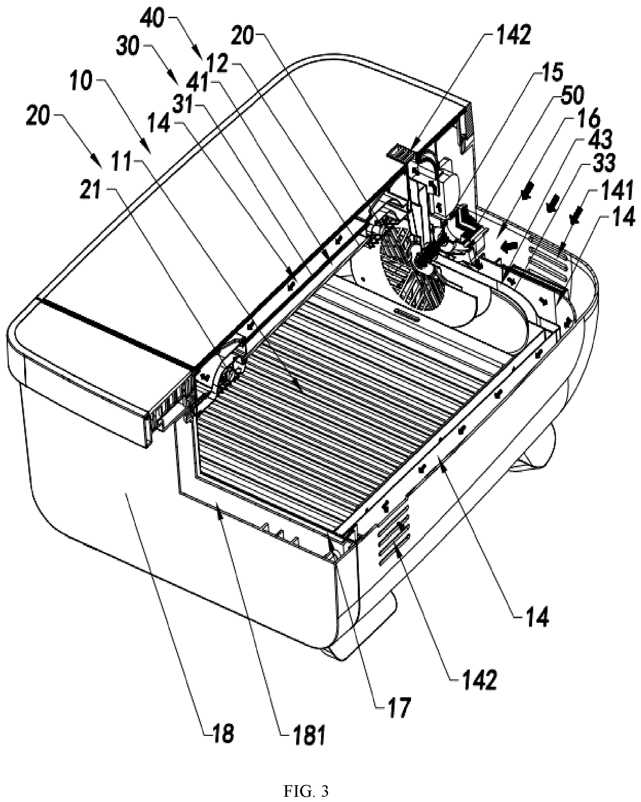

As shown in FIGS. 3 and 4, the body 10 has a heat dissipation air duct 14 connected to the atmosphere, and the heat dissipation air duct 14 has a heat dissipation system 15 for generating a cooling airflow. The heat dissipation air duct 14 is designed to surround at least part of the heat insulation component 30. By surrounding the heat insulation component 30 with the heat dissipation air duct 14, the cooling airflow inside the heat dissipation air duct 14 can cool the heat insulation component 30, thereby reducing the high temperature inside the cooking cavity 11 from being transferred outward through the heat insulation component 30, and further enhancing the heat insulation effect of the air fryer.

As shown in FIGS. 3 and 4, the body 10 has an air intake 141 and an exhaust port 142 connected to the heat dissipation air duct 14, the air intake 141 is suitable for being located on the rear side of the body 10, and the exhaust port 142 is suitable for being located at the bottom of the body 10. The air fryer by locating the air intake 141 and the exhaust port 142 on the rear side and bottom of the body 10, respectively, can hide the air intake 141 and the exhaust port 142, thereby enhancing the overall aesthetics of the air fryer.

Furthermore, in another optional embodiment, the exhaust port 142 can also be individually located on the side or top of the body 10; or simultaneously located on the side, top, and bottom of the body 10. By locating the exhaust port 142 on the side, top, and bottom of the body 10, not only can the rear side intake air and the surrounding sides exhaust air be achieved, thereby enhancing the heat dissipation efficiency of the air fryer, but also the uniform heat dissipation of the body 10 can be achieved, thereby enhancing the heat dissipation effect.

As shown in FIGS. 3 and 4, the rear outer side of the cooking cavity 11 has an installation cavity 16 connected to the heat dissipation air duct 14. The installation cavity 16 contains a drive system 50 and electrical components such as circuit boards and control circuits. The drive system 50 is designed to extend and connect with the hot air circulation system 20 and the heat dissipation system 16. A third heat insulation component 33 that matches the rear wall of the cooking cavity 11 is placed between the installation cavity 16 and the cooking cavity 11, forming a third heat insulation chamber 43 between the third heat insulation component 33 and the rear wall of the cooking cavity 11. The heat dissipation air duct 14 is designed to surround at least part of the third heat insulation chamber 43. By providing the third heat insulation chamber 43 between the installation cavity 16 and the cooking cavity 11, better insulation can be achieved, thereby reducing the impact of high temperatures inside the cooking cavity 11 on the drive system 50 and electrical components in the installation cavity 16, effectively enhancing the performance stability and insulation of the air fryer. At the same time, surrounding at least part of the third heat insulation chamber 43 with the heat dissipation air duct 14 can cool the outer wall of the third heat insulation chamber 43 with the cooling airflow inside the heat dissipation air duct 14, thereby further enhancing the insulation effect of the third heat insulation chamber 43.

As shown in FIGS. 3 and 4, the air intake 141 is suitable for connecting to the installation cavity 16, and the exhaust port 142 is suitable for connecting to the heat dissipation air duct 14. By connecting the air intake 141 to the installation cavity 16, cooling airflow can be directed into the heat dissipation air duct 14 while also cooling the drive system 50 and electrical components in the installation cavity 16, ensuring their normal operation and enhancing the performance stability and reliability of the air fryer.

As shown in FIGS. 3 and 4, the cooking cavity 11 has a side opening 17, and a side cover 18 is provided at the side opening 17 to open and close the side opening 17. One end of the side cover 18 is hinged to the body 10 via a hinge structure, and the other end is suitable for being fastened to the body 10 through a detachable locking mechanism. By hinging one end of the side cover 18 to the body 10, the side cover 18 can be easily flipped to open and close the side opening 17, thereby enhancing the convenience of use of the air fryer.

As shown in FIGS. 3 and 4, the side cover 18 contains a cold air channel 181, with one end of the cold air channel 181 connected to the heat dissipation air duct 14 and the other end connected to the atmosphere. By providing the cold air channel 181 within the side cover 18 that connects to the heat dissipation air duct 14, heat can be dissipated from the side cover 18, reducing the transfer of high temperatures from the cooking cavity 11 to the surface of the side cover 18, thereby lowering the risk of burns to users and effectively improving the safety of the air fryer.

### Embodiment 2:

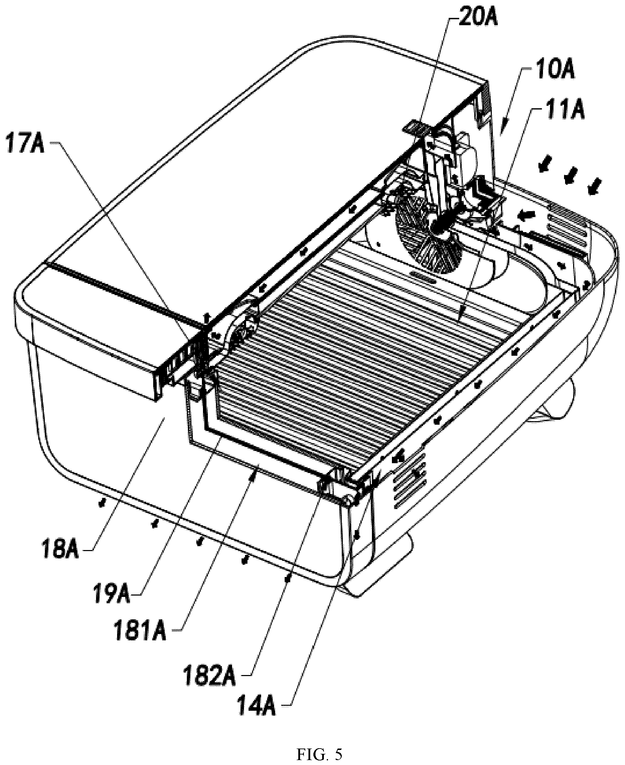

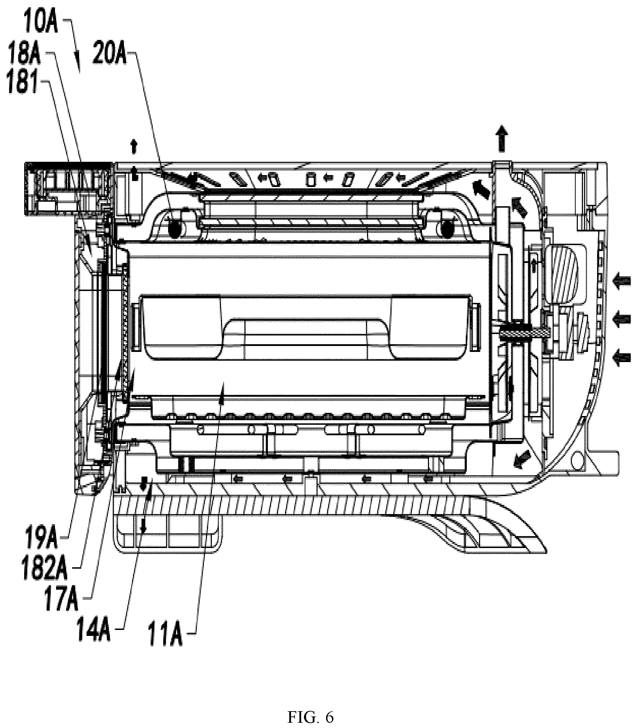

FIGS. 5 and 6 illustrate a second embodiment of an air fryer with good thermal insulation in this application. The air fryer including a body 10A, a cooking cavity 11A located within the body 10A for placing food to be cooked, and a hot air circulation system 20A connected to the cooking cavity 11A. The hot air circulation system 20A is adapted to generate a circulating hot airflow and introduce it into the cooking cavity 11A to heat the food inside the cooking cavity 11A.

As shown in FIGS. 5 and 6, the air fryer in this second embodiment shares some structural features and functions with the air fryer in the first embodiment, which will not be repeated here. The difference between the air fryer in this second embodiment and the air fryer in the first embodiment lies in the structure of the side cover 18.

As shown in FIGS. 5 and 6, the cooking cavity 11A has a side opening 17A, and a side cover 18A is provided at the side opening 17A to open and close the side opening 17A. The side cover 18A has a visual port 182A connected to the cooking cavity 11A and a visual component 19A that seals the visual port 182A. The visual component 19A is made of high-temperature resistant transparent materials such as heat-resistant transparent glass or heat-resistant transparent plastic. By providing the visual port 182A on the side cover 18A and placing the visual component 19A made of heat-resistant transparent materials at the visual port 182A, the conditions inside the cooking cavity 11A can be made visible, allowing users to intuitively observe the cooking status of the food inside the cooking cavity 11A, thereby improving the cooking process and enhancing the cooking effect and user experience.

As shown in FIGS. 5 and 6, the side cover 18A contains a cold air channel 181A, with one end of the cold air channel 181A connected to the heat dissipation air duct 14A and the other end connected to the atmosphere. The cold air channel 181A is designed to at least partially surround the visual component 19A. By surrounding the visual component 19A with the cold air channel 181A, the cooling airflow within the heat dissipation air duct 14A can cool the visual component 19A, ensuring its performance stability and reducing the transfer of high temperatures from the cooking cavity 11A to the surface of the visual component 19A, thereby lowering the risk of burns to users and effectively improving the safety and performance stability of the air fryer.

### Embodiment 3:

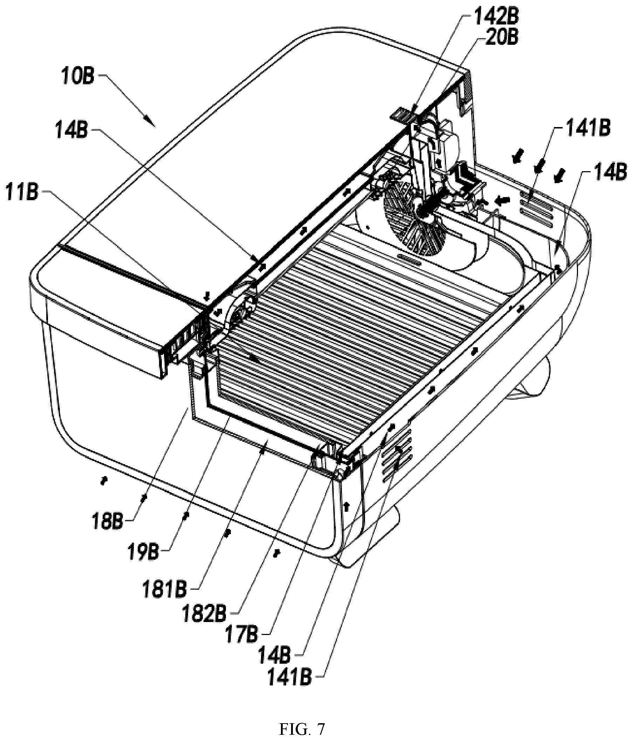

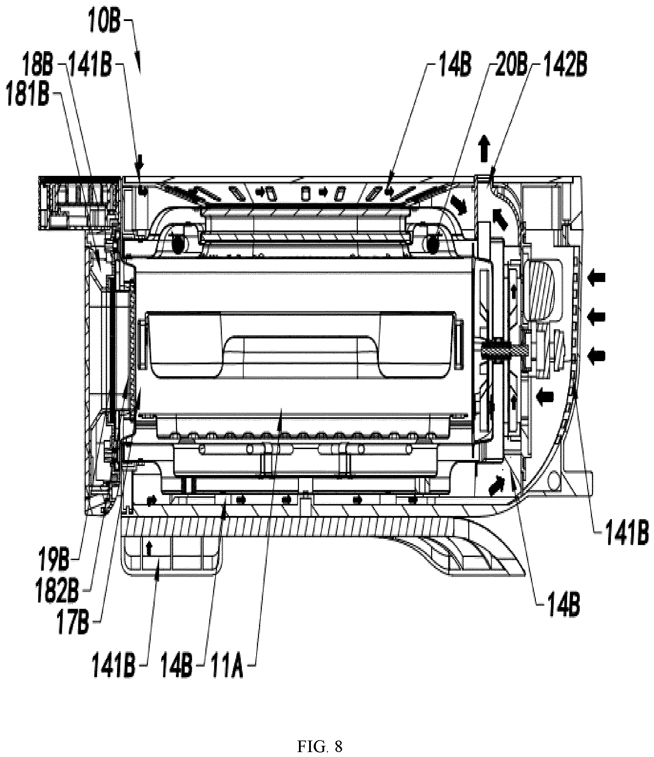

FIGS. 7 and 8 illustrate a third embodiment of an air fryer with good thermal insulation in this application. The air fryer including a body 10B, a cooking cavity 11B located within the body 10B for placing food to be cooked, and a hot air circulation system 20B connected to the cooking cavity 11B. The hot air circulation system 20B is adapted to generate a circulating hot airflow and introduce it into the cooking cavity 11B to heat the food inside the cooking cavity 11B.

As shown in FIGS. 7 and 8, the air fryer in this third embodiment shares some structural features and functions with the air fryer in the first embodiment, which will not be repeated here. The difference between the air fryer in this third embodiment and the air fryer in the first embodiment lies in the structure of the side cover 18 and the heat dissipation air duct 14.

As shown in FIGS. 7 and 8, in an optional embodiment, the body 10B shell has an air intake 141B and an exhaust port 142B connected to the heat dissipation air duct 14B, with the air intake 141B located at the bottom of the body 10B and the exhaust port 142B located at the top rear of the body 10B. By placing the air intake 141B at the bottom of the body 10B and the exhaust port 142B at the top rear, both can be effectively hidden, enhancing the overall aesthetics of the air fryer. Additionally, positioning the exhaust port 142B at the top rear of the body 10B can reduce the risk of burns to users from the hot airflow exiting the exhaust port 142B, thereby effectively improving safety.

Furthermore, in an optional embodiment, the air intake 141B can also be individually located on the side or top of the body 10B, or simultaneously located on the side, top, and bottom of the body 10B. By placing the air intake 141B on the side, top, and bottom of the body 10B, surrounding air intake can be achieved, effectively improving intake efficiency and thus enhancing the heat dissipation efficiency and effect of the body 10B.

As shown in FIGS. 7 and 8, the cooking cavity 11B has a side opening 17B, and a side cover 18B is provided at the side opening 17B to open and close the side opening 17B. The side cover 18B has a visual port 182B connected to the cooking cavity 11B and a visual component 19B that seals the visual port 182B. The visual component 19B is made of high-temperature resistant transparent materials such as heat-resistant transparent glass or heat-resistant transparent plastic. By providing the visual port 182B on the side cover 18B and placing the visual component 19B made of heat-resistant transparent materials at the visual port 182B, the conditions inside the cooking cavity 11B can be made visible, allowing users to intuitively observe the cooking status of the food inside the cooking cavity 11B, thereby improving the cooking process and enhancing the cooking effect and user experience.

### Embodiment 4:

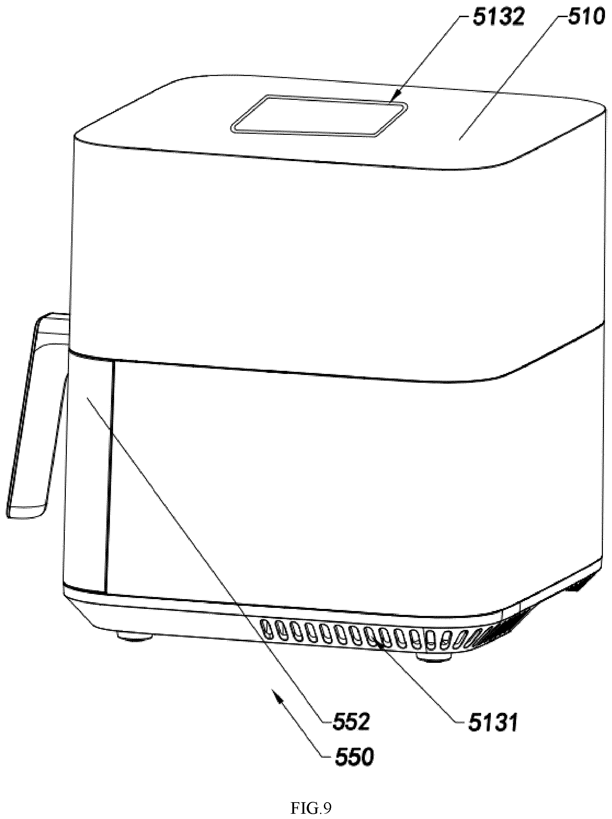

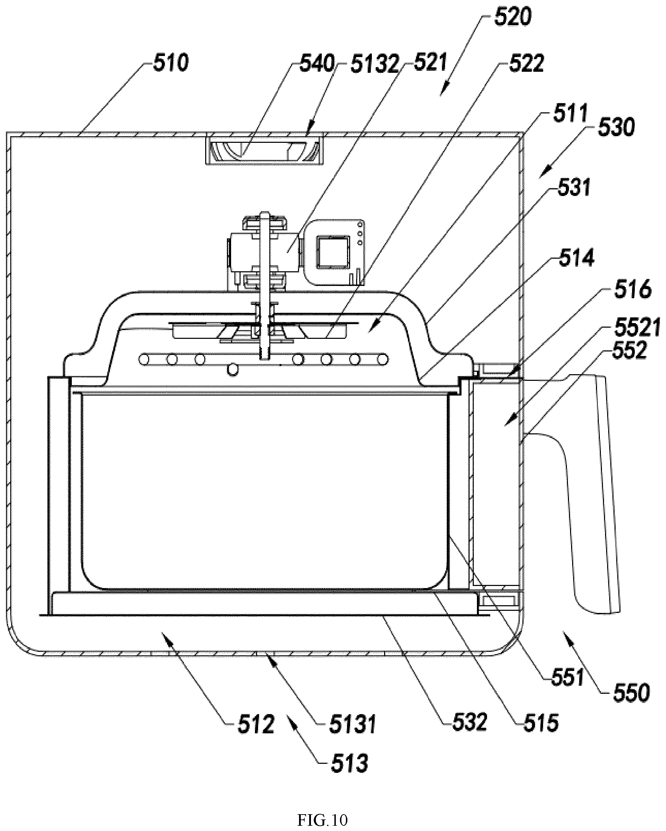

FIGS. 9 and 10 illustrate a fourth embodiment of an air fryer with good thermal insulation provided in this application. The air fryer including a body 510, a cooking cavity 511 located within the body 510, and an air frying system 520 connected to the body 511, the air frying system 520 is adapted to generate a circulating hot airflow and introduce it into the cooking cavity 511 for cooking food.

As shown in FIGS. 10, the exterior of the cooking cavity 511 is surrounded by a heat insulation component 530. A heat insulation gap is formed between the heat insulation component 530 and the outer wall of the cooking cavity 511, which contains a heat insulation medium. By placing the heat insulation component 530 around the cooking cavity 511 and filling the gap between the heat insulation component 530 and the outer wall of the cooking cavity 511 with the heat insulation medium, the heat inside the cooking cavity 511 can be effectively isolated. When the temperature inside the cooking cavity 511 rises, the high temperature will not transfer to the outside of the cooking cavity 511, thus preventing any impact on the external structure of the cooking cavity 511 and effectively raising the temperature limit within the cooking cavity 511, thereby improving cooking efficiency.

As shown in FIGS. 10, the body 510 also has a heat dissipation air duct 512, which is designed to surround the heat insulation component 530. The heat dissipation air duct 512 contains a heat dissipation system 540, and the body 510 has a ventilation port 513 that connects the heat dissipation air duct 512 to the atmosphere. By surrounding the heat insulation component 530 with the heat dissipation air duct 512 and incorporating a heat dissipation system 540 within the heat dissipation air duct 512, heat can be effectively dissipated from the heat insulation component 530, thereby reducing the impact of the temperature inside the cooking cavity 511 on the external structure.

As shown in FIGS. 10, the ventilation port 513 including an air intake 5131 and an exhaust port 5132, with the air intake 5131 located on the rear side of the body 510 and the exhaust port 5132 located at the bottom of the body 510. External cold air can enter the heat dissipation air duct 512 through the air intake 5131 and flow toward the exhaust port 5132 under the influence of the heat dissipation system 540. By positioning the air intake 5131 and the exhaust port 5132 on the rear side and bottom of the body 510, both can be concealed, enhancing the overall aesthetics of the air fryer product. As shown in FIGS. 10, in an optional embodiment, the heat dissipation system 540 is preferably positioned near the air intake 5131. By placing the heat dissipation system 540 close to the air intake 5131, the circulation speed of the cooling airflow within the heat dissipation air duct 512 can be increased, to enhance heat dissipation efficiency and effect. As shown in FIGS. 10, the air frying system 520 including a drive motor 521 and a hot air circulation fan 522 driven by the drive motor 521. The drive motor 521 is preferably located within the heat dissipation air duct 512 and close to the heat dissipation system 540. By positioning the drive motor 521 within the heat dissipation air duct 512, it can be cooled by the cooling airflow within the heat dissipation air duct 512. Additionally, placing the drive motor 521 near the heat dissipation system 540 enhances the cooling effect for the drive motor 521. As shown in FIGS. 10, the cooking cavity 511 is formed by an air duct plate 514 and a lower machine core 515. The heat insulation component 530 including an upper heat insulation plate 531 and a lower heat insulation plate 532, which correspond to the air duct plate 514 and the lower machine core 515, respectively. The shapes of the upper and lower heat insulation plates 531 and 532 match those of the air duct plate 514 and the lower machine core 515, but their overall dimensions are larger. By designing the shapes of the upper and lower heat insulation plates 531 and 532 to match the air duct plate 514 and the lower machine core 515, but with larger overall dimensions, the upper and lower heat insulation plates 531 and 532 can be manufactured using molds that are one size larger than those for the air duct plate 514 and the lower machine core 515. This not only effectively reduces production costs but also minimizes redesign costs.

In an optional embodiment, the upper heat insulation plate 531 and the lower heat insulation plate 532 are preferably made of heat insulation materials. By using heat insulation materials to fabricate the upper and lower heat insulation plates 531 and 532, the impact of high temperatures inside the cooking cavity 511 on external structures can be further reduced, effectively enhancing structural reliability and safety.

As shown in FIGS. 10, the body 510 has a side opening 516 that connects to the cooking cavity 511. A frying basket 550 can be extracted through the side opening 516 within the cooking cavity 511. The frying basket 550 including a basket body 551 and a door mechanism 552 connected to the basket body 551 to seal the side opening 516. The door mechanism 552 is made of high-temperature resistant insulating materials. By using high-temperature resistant insulating materials for the door mechanism 552, the influence of high temperatures inside the cooking cavity 511 on the structure of the door mechanism 552 can be avoided, and the risk of burns to users from high temperatures transferring outside the door mechanism 552 can also be prevented, effectively improving safety.

As shown in FIGS. 10, in an optional embodiment, the door mechanism 552 contains a fourth heat insulation chamber 5521, which houses a heat insulation medium. By incorporating the fourth heat insulation chamber 5521 within the door mechanism 552 and filling it with a heat insulation medium, the impact of temperatures inside the cooking cavity 511 on external structures can be effectively reduced, significantly enhancing safety. In the air fryer, the heat insulation medium is preferably made of high-temperature resistant insulating materials such as insulation cotton or aerogel felt. Using materials with good heat insulation properties like insulation cotton or aerogel felt as the heat insulation medium can effectively improve heat insulation effects.

The content above is a further detailed explanation made in conjunction with specific preferred embodiments of this application, and the objectives of this application have been completely and effectively achieved. Those skilled in the art should understand that the above description and the embodiments shown in the accompanying drawings are only for illustration and do not limit this application. For those of ordinary skill in the art to which this application pertains, without departing from the premise of this application, several simple deductions or substitutions can also be made, all of which should be regarded as falling within the patent protection scope determined by the claims submitted with this application.

It should be noted that the terms used herein are for the purpose of describing specific embodiments only and are not intended to limit exemplary embodiments according to the present disclosure. As used herein, the singular forms are intended to including the plural forms as well, unless the context clearly indicates otherwise. Furthermore, it should also be understood that the terms "including" and/or "including", when used in this specification, indicate the presence of features, steps, operations, devices, components, and/or combinations thereof.

Relative arrangements, numerical expressions, and numerical values of the components and steps described in these embodiments do not limit the scope of the present disclosure unless specifically stated otherwise. At the same time, it should be understood that for convenience of description, the dimensions of the parts shown in the drawings are not drawn to an actual scale. Techniques, methods, and apparatus known to those of ordinary skill in the relevant art may not be discussed in detail, but where appropriate, should be considered part of the authorized specification. In all of the examples shown and discussed herein, any specific values should be interpreted as merely exemplary, and not as limiting. Accordingly, other examples of exemplary embodiments may have different values. It should be noted that like reference numerals and letters denote like items in the following FIGS., and therefore, once an item is defined in one FIGS., it need not be further discussed in subsequent FIGS.

In the description of the present disclosure, it should be understood that the orientation or positional relationship indicated by orientation words such as "front, back, up, down, left, right," "transverse, vertical, perpendicular, horizontal," and "top, bottom," and the like are generally based on the orientation or positional relationship shown in the drawings, merely for convenience of describing the present disclosure and for simplicity of description, and unless otherwise stated, the orientation words do not indicate or imply that the device or element referred to must have a particular orientation or be constructed and operated in a particular orientation, and therefore are not to be construed as limiting the scope of protection of the present disclosure; and the orientation words "inside and outside" refer to inside and outside with respect to the contour of each component itself.

For ease of description, spatially relative terms such as "on top of", "over", "on the upper surface", "above", and the like may be used herein to describe the spatial positional relationship between one device or feature and other devices or features as illustrated in the FIGS.. It should be understood that the spatially relative terms are intended to encompass different orientations of the device in use or operation in addition to the orientation depicted in the FIGS.. For example, if the devices in the FIGS. are inverted, devices described as "above" or "over" other devices or constructions would then be positioned "below" or "beneath" the other devices or constructions. Thus, the exemplary term "above" can include both orientations of "above" and "below." The device can also be positioned in other different ways (rotated by 90 degrees or at other orientations) and the spatially relative depictions used herein are interpreted accordingly.

In addition, it should be noted that the use of the terms "first", "second", and the like to define components is merely for ease of distinguishing between the corresponding components, and if not otherwise stated, the terms have no special meaning and therefore should not be interpreted to limit the scope of protection of the present disclosure.

The air fryer with good thermal insulation provided by the present disclosure has been described in detail above, the principles and embodiments of the present disclosure have been described herein with reference to specific examples, the description of the above embodiments is provided only to help understand the method of the present disclosure and its core idea; and meanwhile, variations will be made to the specific embodiments and the scope of application by those of ordinary skill in the art in view of the idea of the present disclosure. In summary, the contents of this specification should not be construed as limiting the present disclosure.

### Industrial applicability

In the air fryer with good thermal insulation in this example, by providing a heat insulation component on the outside of the cooking cavity that matches the outer wall of the cooking cavity, a heat insulation chamber can be formed, and a heat insulation medium can be placed inside the heat insulation chamber. This effectively reduces the impact of high temperatures inside the cooking cavity on the electrical components outside and mitigates the risk of the body surface temperature becoming excessively high, thereby enhancing the performance stability and safety of the air fryer and improving the user experience.

## Claims

1. An air fryer with good thermal insulation, including a body (10, 10A, 10B), a cooking cavity (11, 11A, 11B) located within the body (10, 10A, 10B), and a hot air circulation system (20, 20A, 20B) connected to the cooking cavity (11, 11A, 11B), wherein at least part of the outside of the cooking cavity (11, 11A, 11B) is equipped with a heat insulation component (30) that matches the outer wall of the cooking cavity (11, 11A, 11B), the heat insulation component (30) and the outer wall of the cooking cavity (11, 11A, 11B) are suitable for forming a heat insulation chamber (40), the heat insulation chamber (40) contains a heat insulation medium.

2. The air fryer with good thermal insulation according to claim 1, wherein the top of the cooking cavity (11, 11A, 11B) has an air duct plate (12) forming at least part of the cooking cavity (11, 11A, 11B), a first heating component (21) located below the air duct plate (12), a first heat insulation component (31) located above the air duct plate (12), the first heat insulation component (31) and the air duct plate (12) are suitable for forming a first heat insulation chamber (41), the first heat insulation chamber (41) corresponds to at least part of the first heating component (21).

3. The air fryer with good thermal insulation according to claim 1, wherein the bottom of the cooking cavity (11, 11A, 11B) has a lower machine core (13) forming at least part of the cooking cavity (11, 11A, 11B), a second heating component (22) located above the lower machine core (13), a second heat insulation component (30) located below the lower machine core (13), the second heat insulation component (30) and the lower machine core (13) are suitable for forming a second heat insulation chamber (42), the second heat insulation chamber (42) corresponds to at least part of the second heating component(22).

4. The air fryer with good thermal insulation according to any one of claims 1 to 3, wherein the body (10, 10A, 10B) has a heat dissipation air duct (14, 14A, 14B) connected to the atmosphere, a heat dissipation system (15) located within the heat dissipation air duct (14, 14A, 14B) for generating a cooling airflow, the heat dissipation air duct (14, 14A, 14B) is designed to surround at least part of the heat insulation component (30).

5. The air fryer with good thermal insulation according to claim 4, wherein the body (10, 10A, 10B) has an air intake (141, 141B) and an exhaust port (142, 142B) connected to the heat dissipation air duct (14, 14A, 14B), the air intake (141, 141B) located on the rear side of the body (10, 10A, 10B), the exhaust port (142, 142B) located on the top, bottom, or one or more sides of the body (10, 10A, 10B).

6. The air fryer with good thermal insulation according to claim 4, wherein the body (10, 10A, 10B) has an air intake (141, 141B) and an exhaust port (142, 142B) connected to the heat dissipation air duct (14, 14A, 14B), with the air intake (141, 141B) located on the top, bottom, or one or more sides of the body (10, 10A, 10B), and the exhaust port (142, 142B) located at the top rear of the body (10, 10A, 10B).

7. The air fryer with good thermal insulation according to claim 4, wherein the rear outer side of the cooking cavity (11, 11A, 11B) has an installation cavity (16) connected to the heat dissipation air duct (14, 14A, 14B), the installation cavity (16) containing a drive system (50) and electrical components, the drive system (50) is designed to connect with the hot air circulation system (20, 20A, 20B) and the heat dissipation system (15), a third heat insulation component (33) matching the rear wall of the cooking cavity (11, 11A, 11B) is placed between the installation cavity (16) and the cooking cavity (11, 11A, 11B), the third heat insulation component (33) and the rear wall of the cooking cavity (11, 11A, 11B) are suitable for forming a third heat insulation chamber (43), the heat dissipation air duct (14, 14A, 14B) is designed to surround at least part of the third heat insulation chamber (43); and
further, wherein the body (10, 10A, 10B) has an air intake (141, 141B) and an exhaust port (142, 142B), the air intake (141, 141B) connected to the installation cavity (16) and the exhaust port (142, 142B) connected to the heat dissipation air duct (14, 14A, 14B).

8. The air fryer with good thermal insulation according to any one of claims 1 to 7, wherein the cooking cavity (11, 11A, 11B) has a side opening (17, 17A, 17B), a side cover (18, 18A, 18B) that can be opened and closed is provided at the side openings (17, 17A, 17B), the side cover (18, 18A, 18B) has a visual port (182A, 182B) connected to the cooking cavity (11, 11A, 11B), and a visual component (19A, 19B) seals the visual port (182A, 182B); and
further, wherein the body (10, 10A, 10B) has a heat dissipation air duct (14, 14A, 14B) connected to the atmosphere, a heat dissipation system (15) located within the heat dissipation air duct (14, 14A, 14B) for generating a cooling airflow, the heat dissipation air duct (14, 14A, 14B) is designed to surround at least part of the heat insulation chamber (40), a cold air channel (181, 181A) is located within the side cover (18, 18A, 18B), one end of the cold air channel (181, 181A) connected to the heat dissipation air duct (14, 14A, 14B), and the other end connected to the atmosphere.

9. The air fryer with good thermal insulation according to claim 1, wherein a heat dissipation air duct (512) located within the body (510), the heat dissipation air duct (512) designed to surround the heat insulation component (530), a heat dissipation system (540) located within the heat dissipation air duct (512), the body (510) has a ventilation port (513) that connects the heat dissipation air duct (512) to the atmosphere.

10. The air fryer with good thermal insulation according to claim 9, wherein the ventilation port (513) including an air intake (5131) and an exhaust port (5132), the air intake (5131) located on the rear side of the body (510), the exhaust port (5132) located at the bottom of the body (510), external cold air is suitable to flow from the air inlet (5131) into the heat dissipation duct (513) and then towards the air outlet (5132) under the action of the heat dissipation system (540); and
further, wherein the heat dissipation system (540) is preferably positioned near the air intake (5131).

11. The air fryer with good thermal insulation according to claim 9, wherein an air frying system (520) located within the body (510), and the air frying system (520) connected to the cooking cavity (511), the air frying system (520) including a drive motor (521) and a hot air circulation fan (522) connected to the drive motor (521), the drive motor (521) is located within the heat dissipation air duct (512) and positioned close to the heat dissipation system (540).

12. The air fryer with good thermal insulation according to claim 1, wherein the cooking cavity (511) is formed by a lower machine core (515) and an air duct plate (514), the heat insulation component (530) including an upper heat insulation plate (531) and a lower heat insulation plate (532), the upper insulation plate (531) and the lower insulation plate (532) are respectively adapted to correspond to the air duct plate (514) and the lower movement (515), the shapes of the upper insulation board (531) and the lower insulation board (532) are respectively consistent with the shapes of the air duct board (514) and the lower movement (515),the overall size of the upper insulation board (531) and the lower insulation board (532) is respectively larger than that of the air duct board (514) and the lower movement (515); and
further, wherein both the upper heat insulation plate (531) and the lower heat insulation plate (532) are made of heat insulation material.

13. The air fryer with good thermal insulation according to claim 1, wherein the side of the body (510) has a side opening (516) connected to the cooking cavity (511), a frying basket (550) can be extracted through the side opening (516) within the cooking cavity (511), the frying basket (550) including a basket body (551) and a door mechanism (552) connected to the basket body (551) to seal the side opening (516), the door mechanism (552) is made of high temperature resistant insulation material.

14. The air fryer with good thermal insulation according to claim 13, wherein the door mechanism (552) contains a fourth heat insulation chamber (5521), the fourth heat insulation chamber (5521) is equipped with the heat insulation medium.

15. The air fryer with good thermal insulation according to any one of claims 1 to 14, wherein the heat insulation medium is heat insulation cotton, aerogel felt and other high temperature resistant heat insulation material.
